# EUROPEAN PATENT SPECIFICATION

(11) **EP 1 110 431 B1**
(45) Date of publication and mention of the grant of the patent: **23.04.2003**
(21) Application number: 99941749.6
(22) Date of filing: 24.08.1999
(51) Int. Cl.: H05B 3/86, H05B 3/84

(54) **PRODUCTION OF HEATED WINDOWS**
HERSTELLUNG VON BEHEIZTEN FENSTERN
PRODUCTION DE FENETRES CHAUFFEES

(30) Priority: 28.08.1998 GB 9818760
(43) Date of publication of application: 27.06.2001
(73) Proprietor: Pilkington Automotive Limited, St Helens, Merseyside WA10 3TT (GB)
(72) Inventor: CASTLE, Derek, Charles, Halesowen, West Midlands B63 1DQ (GB); CHAMBERLAIN, Mark, Andrew, Birmingham, West Midlands B31 2JH (GB); SNEE, Roger, Keith, Newcastle upon Tyne NE6 5TY (GB)
(74) Representative: Halliwell, Anthony Charles
(86) International application number: GB9902795
(87) International publication number: WO00013468

(56) References cited:
- EP-A- 0 385 791
- US-A- 4 778 732
- US-A- 4 878 850
- US-A- 5 213 828

## Description

This invention relates to a process for the production of heated windows, in particular windows which are electrically heated by an array of fine, closely spaced wires embedded in a plastics interlayer extending between inner and outer panes.

In such windows, the heating wires are embedded in a ply of interlayer material sandwiched between inner and outer panes and extend between and in contact with opposed bus bars whereby a heating current may be passed through the wires. Heated windows may be used to dispel condensation or ice; thus they are particularly useful when installed in vehicles, e.g. as the windscreen or rear window of a car, or as the windscreen of a locomotive or aircraft, or as a ship's window. In this specification, references to "inner" and "outer" panes relate to the orientation of the panes when the window is in an installed condition, e.g. in a vehicle.

In the process described in EP-A1-385 791, a first curved glass pane, which is to constitute the inner pane of a laminated vehicle window is placed on a horizontal jig having an upper surface with a curvature corresponding to that of the glass pane. A thin sheet of interlayer material, for example a sheet of polyvinylbutyral (PVB), is laid over the glass pane so that its curvature conforms to that of the glass. Narrow copper strips, for example 2-3 mm wide and about 0.05 mm thick, tinned with a surface layer of a tin lead alloy to protect the copper surface from oxidation, are laid over the PVB sheet in positions adjacent opposite edges of the heated area of the laminated window to be produced and a heated iron is run over the copper strips to melt the PVB material locally and embed the narrow copper strips in it. Two jigs, each carrying a pre-formed array of fine, closely-spaced tungsten heating wires are then laid over the PVB sheet so that the wires rest on the PVB sheet. Preferably, further, wider copper strips, again tinned with a surface layer of tin lead alloy, are then applied over the aforementioned narrow copper strips so that they extend beyond the narrow copper strips on both edges thereof. A hot iron is then run over the surface of the wider copper strips to cause them to adhere to the PVB sheet and temporarily secure the tungsten wires in position on the PVB sheet by trapping them between the copper strips and the PVB sheet. The ends of the wider copper strips may extend beyond the edges of the glass for connection of an electrical supply across the array of tungsten heating wires, using the copper strips as bus bars. A second curved glass pane of corresponding size and curvature to the first pane, is then placed over the PVB sheet. To improve the electrical connection between the copper strips acting as bus bars and the tungsten heating wires, the tinned wider copper strips overlying the heating wires are provided with a surface layer of a low melting point solder (e.g. a lead/bismuth eutectic melting at 124°C or a tin/bismuth eutectic melting at 138°C) on their faces in connection with the array of tungsten heating wires. The narrow copper strips in contact with the array of heating wires may also be provided with a surface layer of low melting point solder. The assembly is then heated in an autoclave. During the autoclaving, the PVB melts and the tungsten wire array and the wider copper strips become embedded in the PVB. Also, the low melting point solder on the copper strips melts providing a secure, durable electric contact between the copper strips and the tungsten heating wires.

The process described in EP-A1-385 791 dates from 1989. Its introduction into commercial production of heated windows for vehicles resulted in a significant reduction in the in-service failure rate of the windows. This was attributed to two factors: (a) the thin tungsten heating wires are held in a tight mechanical grip by the low melting point solder, whereas previously it had been possible for the wires to lose contact with the busbar, and, (b) since the solder fills the space between the busbars, any moisture that may enter the laminated window via its edge is prevented from entering between the busbars, and so the possibility of an electrolytic reaction occurring between the dissimilar metals is avoided. Both these factors ensure a more durable electrical connection.

Nevertheless, while the problem of inoperative wires (i.e. wires that no longer heat because they have lost their electrical connection at some point, and hence are no longer part of the electrical circuit) was reduced by the invention of EP-A1-385 791, it was not entirely eliminated. In recent years, the trend towards longer warranties on cars in particular has resulted in pressure on the automotive glass supplier to further improve the durability of heated windows.

However, having greatly alleviated the two factors described above as possible causes of failure, it was not clear what was causing certain wires to fail. A study of failed heated windows was therefore undertaken, examining and analysing the failed wires for clues as to what had caused the failure. Possible causes included mechanical breakage of the wires (but this in turn raised the question of whether, e.g., poor quality wire was to blame, or excessive stress in service), an oxidation reaction (but it was not clear why only certain wires were affected), or some other cause of attenuation and ultimately, failure.

As a result of the study, it was observed that wire failure was occurring most frequently at points within a few millimetres of the busbar. X-ray analysis of these failure sites indicated the presence of bromine and potassium, in addition to the elements expected. It was then realised that localised corrosion of the wires was a possible cause, but the question remained as to the source of the chemicals involved.

Initially, the obvious sources were considered, such as contamination of the wire itself, or of the materials in immediate contact with the wire, but without success. Surprisingly, it was then found that busbar strip which had been double washed under laboratory conditions still had small quantities of bromine present.

When manufacturing heated windows of the type described above, it has been the practice, prior to applying the low melting point solder to the copper bus bars, to coat one side of the bus bars with a flux, in order to improve the adhesion of the solder to the bus bars. It was realised that the residual bromine was likely to originate from this flux, and indeed, analysis of the flux used confirmed that it contained bromine. It would appear that there is a major disadvantage in using halogen based fluxes in that despite washing the bus bar before the soldering operation, halogen can get inside the finished heated windscreen. Evidently, this residual halogen can cause failure of the tungsten heating wires in the vicinity of the tungsten/bus bar joint due to a corrosion mechanism acting on the tungsten wires. The mechanism is not yet fully understood, but it would appear to require the presence of a halogen, such as bromine, and water (from moisture ingress).

It would be desirable to improve the durability of wire-heated windows by reducing the likelihood of corrosion of the wires.

According to the present invention there is provided a process for the production of a wire-heated laminated window comprising an array of fine, closely spaced heating wires embedded in a ply of interlayer material sandwiched between inner and outer panes, said array extending between and in contact with opposed bus bars at least one of which is provided with a surface layer of low melting point solder on a face in contact with the heating wires, in which process the laminate is subjected to an autoclave step to adhere the interlayer material to adjacent panes and to melt the solder to provide good electrical contact between the bus bar and the heating wires, characterised in that prior to applying low melting point solder to a face of at least one bus bar that face is coated with a halogen-free flux.

Preferably, the halogen-free flux is an organic flux which may be a water-based flux or a non-aqueous flux. Alternatively, the flux may be based on phosphoric acid.

Further preferably, the halogen-free flux comprises at least one carboxylic acid and/or a derivative thereof.

Suitably, the carboxylic acid is myristic acid or stearic acid and/or derivatives of these acids.

Conveniently, the derivatives of the carboxylic acids are esters.

The present invention also provides a wire-heated laminated window comprising an array of fine, closely spaced heating wires embedded in a ply of interlayer material sandwiched between and adhered to outer panes, the array extending between and in contact with opposed bus bars at least one of which is provided with a surface layer of low melting point solder on a face in contact with the heating wires characterised in that underneath the surface layer of the low melting point solder applied to a face of at least one bus bar that face has been coated with a halogen-free flux.

The invention will now be illustrated by the following non-limiting description of a preferred embodiment with reference to the accompanying drawings in which:-
Figure 1 is a general view of an electrically heated window, viewed in a direction approximately normal to the surface of the window,
Figure 2 is a greatly enlarged cross-sectional view of a small marginal part of the window of Figure 1, taken on the line II-II shown in Figure 1.

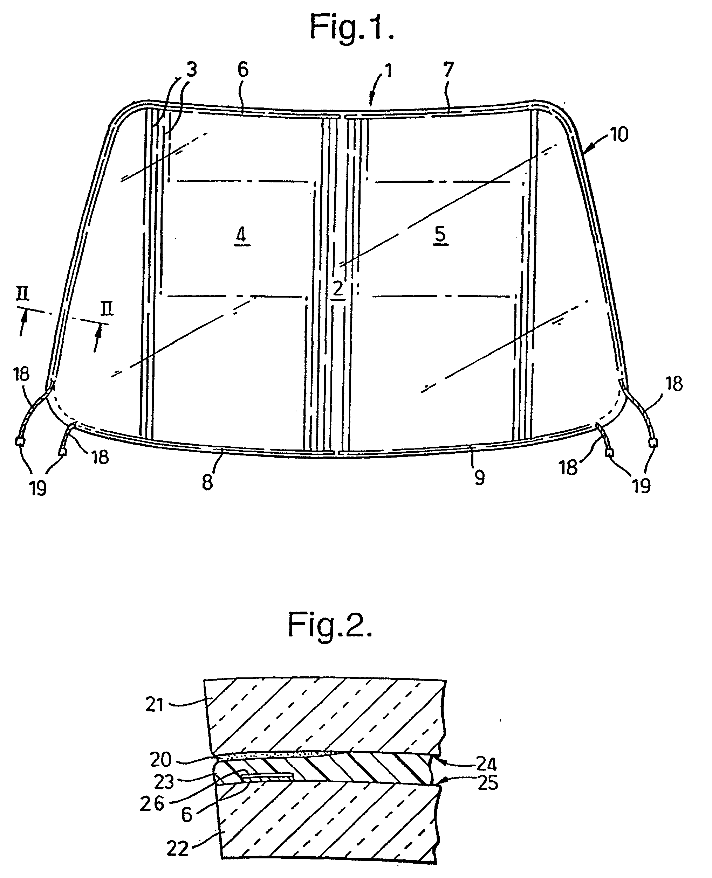

Figure 1 shows one example of an electrically heated window 1 for which the invention may be employed, the example being a windscreen for a car. The window is heated by an array 2 of fine, closely spaced wires 3, e.g. of tungsten. The wires 3 are arranged in two banks 4,5 extending between respective busbars. Accordingly there are two busbars 6,7 which extend along the top edge of the windscreen, and two busbars 8,9 which extend along the bottom edge, all the busbars being positioned a short distance inboard of the periphery 10 of the windscreen. The number of banks of wires may be varied according to the size of the windscreen, and the busbars are made from electrically conductive strip, normally metal strip, for example, copper strips 3-10 mm wide, preferably 6 mm wide and about 0.04-0.08 mm thick. The strips are preferably tinned with a surface layer of tin, or tin lead alloy (Sn:Pb ratio of 60:40) to protect the copper from oxidation.

It will be appreciated that as the heating wires are positioned very close to one another in heated windows of the type described in this specification, in Figure 1 it is not possible to represent all the wires that are actually present in such windows. Consequently it should be understood that only a proportion of the heating wires are shown in Figure 1, and they are shown further apart than is actually the case. Furthermore, to avoid excessive repetition for the draughtsman, where the area covered by wires is relatively large, no wires have been drawn in over part of the area. Instead, dot-dashed lines have been used to indicate the extent of the area covered by wires.

The busbars 6,7,8,9 may be connected to flying leads 18 by soldering, possibly via a small connector tag of known design for neatness (not shown), and the leads have terminations 19 appropriate for connection to a voltage supply. Alternatively, conventional spade connectors may be soldered to the ends of the busbars, and leads attached to the spades.

Connection of the wires 3 to the strip forming each of the busbars 6,7,8,9 is preferably assisted by use of a further piece of busbar strip (not shown) to form a sandwich with the wires between the two strips, a face of at least one of the busbar strips being provided with a surface layer of low melting point solder such that the solder melts on autoclaving to provide good electrical contact between the busbar strip and the wires as described earlier, and in EP-A1-385 791 . The low melting point solder may be applied along the entire length of the busbar strip, or merely to the part of the busbar strip which will be in contact with the heating wires 3, whichever is more convenient. In accordance with the teachings of the invention, a flux which does not contain any halogen (either as an element or as a compound) is applied to a face of at least one busbar before applying low melting point solder to that face. A preferred flux is a water based carboxylic acid flux, i.e. an organic flux. Fluxes of this type offer a suitable compromise between chemical activity and corrosiveness, having reasonable activity without excessive corrosiveness. Examples of commercially available fluxes in this group are sold under the trade names Flowsolder and Acusol NH1. Alternatively, an inorganic halogen-free flux may be used, e.g. a phosphoric acid based flux. Inorganic fluxes have greater chemical activity, but are accordingly aggressive, corrosive materials which require suitable Health and Safety precautions to be taken during handling and use. An example, which contains 85% phosphoric acid, is sold under the trade designation ASP50. All these fluxes are available from Alpha Fry Limited of Tamden House, Marlowe Way, Croydon, surrey, CR0 4X5, UK. Preferably the flux is also free of other oxidising salts such as nitrites and nitrates. Further details of the manufacture of a windscreen are given below.

A windscreen as shown in Figure 1 may include obscuration means, e.g. in the form of an opaque band. Such obscuration means have however been omitted from Figure 1 for the sake of clarity, so that the layout of the busbars may be seen.

Figure 2 shows a greatly enlarged cross-section of a small part of the margin of the windscreen of Figure 1. An obscuration means in the form of an opaque band 20, which may be of ceramic ink or of organic primer, has been added to the cross-sectional view for completeness, and the busbar 6 is shown in the drawing. In a cross-section of the top or bottom edge of the windscreen, a second busbar strip would be visible (assuming that the twin strip "sandwich" construction described above and below had been employed), positioned parallel to the busbar strip shown, possibly with a sectioned heating wire inbetween the two busbar strips. The thickness of obscuration band 20 and busbar 6 have been exaggerated relative to the other parts of the drawing for clarity. Figure 2 shows a typical configuration for a laminated windscreen, comprising two panes 21,22 of glass, with a ply 23 of interlayer material, e.g. polyvinyl butyral ("PVB") in between. Of course, other configurations are possible, for instance an aircraft windscreen may comprise 5 plies, e.g. plies of glass, polyurethane, acrylic glazing material, polyurethane, and glass respectively.

In Figure 2, glass ply 21 is the outer ply, i.e. the ply which faces outwards when the windscreen is installed in a vehicle, and ply 22 is the inner ply. Busbar 6 is disposed on the outer face 25 of the inner ply 22, between said ply and interlayer 23, and is provided with a coating 26 of low melting point solder. It is also possible to position the busbars (and of course hence the wires) on the inner face 24 of the outer ply 21.

The manufacture of an electrically heated window according to the invention will now be briefly described. It comprises providing in known manner an array of fine, closely-spaced wires attached to busbars traversing the wires at opposed ends of the array. Examples of methods of providing such an array are given in GB 2 228 711 and EP 443 691. If not formed in situ on a piece of interlayer, the array is placed on such a piece, itself lying on a flat table having a template showing the outline of the window to be manufactured marked on the surface of the table. This enables the array and busbars to be accurately positioned with respect to the outline of the window.

Advantageously, the busbars should be positioned at least 10 mm from the periphery of the window, failing that, at least 5 mm and certainly at least 2 mm from the periphery of the window. This reduces the likelihood of moisture ingress reaching the busbar and wires.

Where the busbar is to be of sandwich construction a second length of busbar strip is laid down on top of the first so as to overlap it. When laying down of busbars has been completed, any spade, ribbon or tag connectors to be used are soldered to the busbars. Flying leads may be attached now or after autoclaving.

The interlayer is then made up into a laminated window of the desired configuration, e.g. accurately positioned on a glass sheet which has been cut (and in the case of a windscreen, bent) to shape to constitute one ply of the laminated window, and another similarly prepared glass sheet is placed on top of the interlayer in superposed relationship. While maintaining the assembly of three plies accurately in position relative to each other, the interlayer is trimmed to approximate shape by removing excess protruding interlayer material.

The assembly is then de-aired and autoclaved in known manner under conditions of temperature and pressure appropriate to the interlayer material, e.g. at 135°C to 150°C and 8 to 15 bars for 15 to 45 minutes for PVB. During autoclaving, the low melting point solder melts and flows around the wires. After autoclaving the window may be finished by accurately trimming the interlayer to shape by cutting or abrading.

In order to establish the superiority of windows made using halogen-free fluxes over those made using halogen based fluxes, an accelerated weathering test was devised to simulate the failure of electrically heated windscreens in service. Five heated windows were made using both types of flux. The left-hand circuit of each window was manufactured with the bus bar coated with a bromine-based flux and the right hand circuit of each was manufactured with the bus bar coated with a halogen-free flux. The windows were placed in a humidity tank at 100% RH (relative humidity), and 45°C. The windows were tested weekly and the number of inoperative heating wires noted. After eight weeks testing of the five windows there were 96 inoperative wires in the circuits with the bromine based flux and only 3 inoperative wires in the circuits with the halogen-free flux; an unexpectedly good result.

The bromine based flux used in the above tests is available under the trade name Radsol and the halogen-free flux is a water based carboxylic acid flux available under the trade name Flowsolder. Both fluxes are manufactured by Alpha Fry Limited.

## Claims

1. A process for the production of a wire-heated laminated window (1) comprising an array (2) of fine, closely spaced heating wires (3) embedded in a ply of interlayer material (23) sandwiched between inner and outer panes (21, 22) , said array extending between and in contact with opposed bus bars (6, 7, 8, 9) at least one of which is provided with a surface layer (26) of low melting point solder on a face in contact with the heating wires, in which process the laminate is subjected to an autoclave step to adhere the interlayer material to adjacent panes and to melt the solder to provide good electrical contact between the bus bar and the heating wires, **characterised in that** prior to applying low melting point solder to a face of at least one bus bar that face is coated with a halogen-free flux.

2. A process according to claim 1 wherein the halogen-free flux is an organic flux.

3. A process according to claim 1 or claim 2 wherein the halogen-free flux is a water based organic flux or a non-aqueous organic flux.

4. A process according to any one of the preceding claims wherein the halogen-free flux comprises at least one carboxylic acid and/or a derivative thereof.

5. A process according to claim 4 wherein the halogen-free flux comprises myristic acid or stearic acid and/or derivatives of these acids

6. A process according to claim 4 or 5 wherein the derivatives of the carboxylic acids are esters.

7. A process according to claim 1 wherein the halogen-free flux is based on phosphoric acid.

8. A process according to any one of the preceding claims wherein the solder is a lead/bismuth eutectic melting at 124°C.

9. A process according to any one of claims 1 to 6 wherein the solder is a tin/bismuth eutectic melting at 138°C.

10. A process according to any one of the preceding claims wherein the interlayer material (23) is polyvinyl butyral.

11. A wire-heated laminated window (1) comprising an array (2) of fine, closely spaced heating wires (3) embedded in a ply of interlayer material (23) sandwiched between and adhered to inner and outer panes (21, 22), the array extending between and in contact with opposed bus bars (6, 7, 8, 9) at least one of which is provided with a surface layer (26) of a low melting point solder on a face in contact with the heating wires, **characterised in that** underneath the surface layer of the low melting point solder applied to a face of at least one bus bar that face has been coated with a halogen-free flux.

12. A window according to claim 11, wherein the busbar (6, 7, 8, 9)is positioned at least 5 mm and preferably 10 mm from the periphery (10) of the window.

## Patentansprüche

1. Verfahren zur Herstellung eines drahtbeheizten laminierten Fensters (1) das umfaßt: ein Feld dünner, eng beabstandeter Heizdrähte (3), die in eine Lage eines Zwischenschichtmaterials (23) eingebettet sind, das in Sandwich-Bauart zwischen einer inneren und einer äußeren Scheibe (21, 22) angeordnet ist, wobei sich das Feld zwischen gegenüberliegenden Busschienen (6, 7, 8, 9) erstreckt und mit diesen in Kontakt ist, von denen mindestens eine mit einer Oberflächenschicht (26) aus einem Lot mit niedrigem Schmelzpunkt auf einer Fläche ausgestattet ist, die mit den Heizdrähten in Kontakt ist, wobei in diesem Verfahren das Laminat einem Autoklav-Schritt unterworfen wird, um das Zwischenschichtmaterial an den benachbarten Scheiben anhaften zu lassen und das Lot zu schmelzen, um einen guten elektrischen Kontakt zwischen der Busschiene und den Heizdrähten zu gewährleisten, und das **dadurch gekennzeichnet ist, daß** vor dem Aufbringen des Lots mit niedrigem Schmelzpunkt auf eine Fläche mindestens einer Busschiene diese Fläche mit einem halogenfreiem Flußmittel beschichtet wird.

2. Verfahren nach Anspruch 1, wobei das halogenfreie Flussmittel ein organisches Flussmittel ist.

3. Verfahren nach Anspruch 1 oder 2, wobei das halogenfreie Flussmittel ein organisches Flussmittel auf der Basis von Wasser oder ein nicht-wäßriges Flussmittel ist.

4. Verfahren nach einem der vorhergehenden Ansprüche, wobei das halogenfreie Flussmittel mindestens eine Carbonsäure und/oder ein Derivat davon enthält.

5. Verfahren nach Anspruch 4, wobei das halogenfreie Flussmittel Myristinsäure oder Stearinsäure und/oder deren Derivate enthält.

6. Verfahren nach Anspruch 4 oder 5, wobei die Derivate der Carbonsäure Ester sind.

7. Verfahren nach Anspruch 1, wobei das halogenfreie Flussmittel auf Phosphorsäure beruht.

8. Verfahren nach einem der vorhergehenden Ansprüche, wobei das Lot ein Blei-/Bismuth-Eutektikum ist, das bei 124 °C schmilzt.

9. Verfahren nach einem der vorhergehenden Ansprüche, wobei das Lot ein Zinn-/Bismuth-Eutektikum ist, das bei 138 °C schmilzt.

10. Verfahren nach einem der vorhergehenden Ansprüche, wobei das Zwischenschichtmaterial (23) Polyvinylbutyral ist.

11. Drahtbeheiztes laminiertes Fenster (1), das ein Feld (2) dünner, eng beabstandeter Heizdrähte (3) umfaßt, die in eine Lage eines Zwischenschichtmaterials (23) eingebettet sind, das in Sandwich-Bauart zwischen einer inneren und einer äußeren Scheibe (21, 22) eingebettet ist und an diesen haftet, wobei sich das Feld zwischen gegenüberliegenden Busschienen (6, 7, 8, 9) erstreckt und mit diesen in Kontakt ist, von denen mindestens eine mit einer Oberflächenschicht (26) aus einem Lot mit niedrigem Schmelzpunkt auf einer Fläche ausgestattet ist, die mit den Heizdrähten in Kontakt ist, und das **dadurch gekennzeichnet ist, dass** unter der Oberflächenschicht des Lots mit niedrigem Schmelzpunkt, das auf eine Fläche mindestens einer Busschiene aufgebracht ist, diese Fläche mit einem halogenfreien Flussmittel beschichtet wurde.

12. Fenster nach Anspruch 11, wobei die Busschiene (6, 7, 8, 9) mindestens 5 mm und bevorzugt 10 mm vom Umfang (10) des Fensters entfernt angeordnet ist.

## Revendications

1. Processus de fabrication d'une fenêtre stratifiée chauffée par fils (1) comportant un réseau (2) de fils chauffants fins espacés de manière étroite (3) enrobés dans une épaisseur de matériau de couche intermédiaire (23) enserrée entre des carreaux intérieur et extérieur (21, 22), ledit réseau s'étendant entre des barres collectrices opposées (6, 7, 8, 9), et en contact avec celles-ci, dont au moins une est munie d'une couche de surface (26) d'un métal d'apport de brasage à point de fusion bas sur une face en contact avec les fils chauffants, processus dans lequel le stratifié est soumis à une étape de passage à l'autoclave pour mise en adhérence du matériau de couche intermédiaire sur les carreaux adjacents, et pour faire fondre le métal d'apport de brasage afin de fournir un bon contact électrique entre la barre collectrice et les fils chauffants, **caractérisé en ce qu'**avant d'appliquer le métal d'apport de brasage à point de fusion bas sur une face d'au moins une barre collectrice, cette face est revêtue d'un flux sans halogène.

2. Processus selon la revendication 1, dans lequel le flux sans halogène est un flux organique.

3. Processus selon la revendication 1 ou 2, dans lequel le flux sans halogène est un flux organique à base d'eau ou un flux organique non aqueux.

4. Processus selon l'une quelconque des revendications précédentes, dans lequel le flux sans halogène comporte au moins un acide carboxylique et/ou un dérivé de celui-ci.

5. Processus selon la revendication 4, dans lequel le flux sans halogène comporte de l'acide myristique ou de l'acide stéarique et/ou des dérivés de ces acides.

6. Processus selon la revendication 4 ou 5, dans lequel les dérivés des acides carboxyliques sont des esters.

7. Processus selon la revendication 1, dans lequel le flux sans halogène est à base d'acide phosphorique.

8. Processus selon l'une quelconque des revendications précédentes, dans lequel le métal d'apport de brasage est un alliage eutectique de plomb/bismuth fondant à 124°C.

9. Processus selon l'une quelconque des revendications 1 à 6, dans lequel le métal d'apport de brasage est un alliage eutectique d'étain/bismuth fondant à 138°C.

10. Processus selon l'une quelconque des revendications précédentes, dans lequel le matériau de couche intermédiaire (23) est du butyral de polyvinyle.

11. Fenêtre stratifiée chauffée par fils (1) comportant un réseau (2) de fils chauffants fins espacés de manière étroite (3) enrobés dans une épaisseur de matériau de couche intermédiaire (23) enserrée entre des carreaux intérieur et extérieur (21, 22) et mise en adhérence sur ceux-ci, le réseau s'étendant entre des barres collectrices opposées (6, 7, 8, 9), et en contact avec celles-ci, dont au moins une est munie d'une couche de surface (26) d'un métal d'apport de brasage à point de fusion bas sur une face en contact avec les fils chauffants, **caractérisée en ce qu'**en dessous de la couche de surface, le métal d'apport de brasage à point de fusion bas à été appliqué sur une face d'au moins une barre collectrice qui a été recouverte d'un flux sans halogène.

12. Fenêtre selon la revendication 11, dans laquelle la barre collectrice (6, 7, 8, 9) est positionnée au moins à 5 mm et de préférence à 10 mm à partir de la périphérie (10) de la fenêtre.
